# EUROPÄISCHE PATENTSCHRIFT

(11) **EP 3 188 820 B1**
(45) Veröffentlichungstag und Bekanntmachung des Hinweises auf die Patenterteilung: **06.06.2018**
(21) Anmeldenummer: 15756571.4
(22) Anmeldetag: 08.08.2015
(51) Int. Cl.: B01D 53/34, B01D 53/82, B01D 53/83, F23J 15/02, F23G 7/06, F28D 17/00, F23L 15/04, F27D 17/00

(54) **VERFAHREN UND ANLAGE ZUR ABGASREINIGUNG MITTELS BASISCHER ABSORBENZIEN**
PROCESS AND SYSTEM FOR CLEANING WASTE GAS BY MEANS OF ALKALINE ABSORBENTS
PROCÉDÉ ET INSTALLATION DE NETTOYAGE DE GAZ D'ÉCHAPPEMENT À L'AIDE D'ABSORBANTS BASIQUES

(30) Priorität: 05.09.2014 DE 102014013181
(43) Veröffentlichungstag der Anmeldung: 12.07.2017
(73) Patentinhaber: Sahrhage, Torsten, 83246 Unterwössen (DE)
(72) Erfinder: Sahrhage, Torsten, 83246 Unterwössen (DE)
(74) Vertreter: Kohlmann, Kai
(86) Internationale Anmeldenummer: PCT/EP2015/068319
(87) Internationale Veröffentlichungsnummer: WO 2016/034367

(56) Entgegenhaltungen:
- EP-A1- 0 362 553
- EP-A1- 2 559 475
- WO-A1-90/14560
- WO-A1-2014/034743
- AT-B- 400 006
- DE-A1- 4 336 460
- DE-A1- 10 256 076

## Beschreibung

Die Erfindung betrifft ein Verfahren und eine Anlage zur trockenen Reinigung von Schadstoffen enthaltenden Abgasen eines Verbrennungsprozesses mittels granularen basischen Absorbenzien, die die Schadstoffe des Abgases aufnehmen.

Zur trockenen Reinigung von Abgasen mittels granularer basischer Absorbenzien werden die Abgase durch eine Schüttschicht der Absorbenzien hindurch geleitet, wobei die Absorbenzien die Schadstoffe des Abgases aufnehmen. Mit Schadstoffen belastete Teile der Schüttschicht des Absorptionsbereichs werden kontinuierlich oder diskontinuierlich aus einem die Schüttschicht aufnehmendem Reaktor ausgetragen und durch frische Schüttschichten ersetzt.

Vorrichtungen der gattungsgemäßen Art werden nach dem Stand der Technik überall dort eingesetzt, wo Rauchgase von Industriebetrieben, Klärschlammverbrennungsanlagen, Müllverbrennungsanlagen oder aber Abgase schwerölbetriebener Motoren von anorganischen Halogenverbindungen, wie Fluorwasserstoff (HF) und Chlorwasserstoff (HCl), anorganischen Schwefeloxidverbindungen (SOₓ) der Nichtmetalle wie Schwefeldioxid (SO₂) und Schwefeltrioxid (SO₃), Stickoxiden (NOₓ) und organischen Schadstoffen, wie z.B. Dioxinen/Furanen, unvollständig verbrannten Kohlenwasserstoffen (VOC) und Ruß, sowie von Schwermetallen gereinigt werden müssen.

Emissionen von mit Schadstoffen belasteten Abgasen aus Verbrennungsmotoren entstehen durch das Verbrennen von Schweröl (HFO - Heavy Fuel Oil) oder Ölderivaten mit Durchätzen von einigen bis mehreren hundert Tonnen pro Motor und Tag, mit einem Schwefelgehalt von 0,1 - bis zu 3,5 %. Die internationale maritime Schifffahrtsflotte, bestehend aus weltweit mehr als 80.000 schwerölbetriebenen Kreuzfahrt-, Fracht- und sonstigen Schiffen, gilt mittlerweile als der Industriezweig mit der größten globalen Umweltverschmutzung. Während für stationäre Anlagen und Fahrzeuge an Land seit Jahrzehnten durch sukzessive und immer weiter steigende Umweltauflagen der jeweiligen nationalen Staaten flächendeckend Schadstoffminderungen betrieben werden, ist die Schifffahrtsindustrie aufgrund der Routen auf offener See in internationalen Gewässern ohne Staatshoheiten sowie fehlender weltweiter Grenzwerte, umwelttechnisch ohne durchgreifende Maßnahmen zur Schadstoffminimierung in zu vernachlässigendem Maße in die Pflicht genommen worden. Grenzwerte werden jedoch auch hier in Zukunft durch die IMO (International Maritime Organisation) eingeführt, so dass aktuell alle potenziellen Lösungsansätze zur Schadstoffminderung diskutiert werden.

Neben Primärmaßnahmen, wie der Suche nach alternativen Treibstoffen, wie schwefelreduziertem Öl (MDO - Maritime Diesel Oil), welches ca. 50% teurer als Schweröl ist, bis hin zu verflüssigtem Erdgas (LNG - Liquefied Natural Gas), welches aber technologisch noch nicht ausgereift ist und weitaus schwieriger als Schweröl zu handeln ist, gibt es Entwicklungen von Sekundärmaßnahmen für schwerölbefeuerte Schiffsdieselantriebe, wie die Installation von Abgasreinigungsanlagen.

Trotz einer Vielzahl von landbetriebenen Rauchgasreinigungsanlagen, werden auf See andere Bedingungen an die Anlagen gestellt als an Land, so dass viele Verfahren beispielsweise aufgrund ihrer Verfügbarkeit, ihres Energieverbrauchs, ihres Platzbedarfs, ihrer Anfälligkeit durch Erschütterungen bei Seegang, ihres Druckverlusts, ihrer Komplexität, ihres Wartungsaufwands sowie der vorliegenden Durchsatzschwankungen für einen Betrieb auf hoher See ungeeignet sind.

Derzeit sind nur zwei Systeme bekannt, die ursprünglich für den Betrieb an Land konzipiert und anschließend für die Verwendung auf Schiffen angepasst und installiert wurden. Dabei handelt es sich bei dem ältesten Anlagetyp um einen Nasswäscher, der als "Open Loop Scrubber", als "Closed Loop Scrubber", oder aber als Kombination aus beiden Typen als sogenannter "Hybrid Scrubber" eingesetzt wird. Beim "Open Loop" Verfahren werden die 575 - 675 K heißen Abgase mit sehr großen Mengen Meerwasser ohne alkalische Zusätze bis zum Taupunkt auf ca. 355 - 375 K abkühlt, um die Schwefeloxide auszukondensieren. Das dadurch entstehende Waschwasser, bestehend aus Schwefelsäure und Meerwasser ist bei diesen Temperaturen hoch korrosiv und sorgt in regelmäßigen Abständen zu Durchrostungen an den Nasswäschern. Das mit den Schadstoffen belastete Waschwasser wird nach einer Behandlung verdünnt, und zurück ins Meer gepumpt, so dass ca. 45 m³/MWh Meerwasser benötigt werden. Im "Closed Loop" Verfahren wird das zum Kühlen benötigte Wasser in Mengen von ca. 20 m³/MWh in einem geschlossenen Kreislauf mit alkalischen Zusätzen, wie NaOH (Natriumhydroxid) zirkuliert. Die Reaktionsprodukte Natriumsulfit und Natriumsulfat werden mittels Zentrifugen oder Wasserabscheidern herausgefiltert, in einem Tank zwischengelagert und im Hafen entsorgt. Die anfallende Abwassermenge, die in einem Zwischentank über einen gewissen Zeitraum gelagert werden kann, wird während der Fahrt ins Meer zurückzugeben, wobei die Menge mit ca. 0,1 m³/MWh angegeben wird. Ein "Hybrid Scrubber" bedient sich je nach Meerwasserqualität und Betriebszustand des Schiffs, beider Techniken. Während der Fahrt der Schiffe gilt als Grenzwert für das zurückgepumpte, verdünnte Waschwasser aller Verfahren eine maximale Abnahme des PH-Wertes um 2, wohingegen während der Liegezeiten von Schiffen der absolute Grenzwert des Wassers mit einem PH-Wert oberhalb von 6,5 festgelegt wurde. Die beim Abkühlen der Abgase an das Wasser abgegebene Wärme von nassen Verfahren wird über den Kamin in Form einer deutlich sichtbaren Wasserdampffahne in die Atmosphäre abgeführt. Zur NOₓ - Minderung muss zusätzliche eine DeNOX - SCR Anlage (Selective Catalytic Reduction) installiert werden. SCR Anlagen arbeiten mit Katalysatoren in Temperaturbereichen von 575 - 675 K. Da große Rußmengen im Abgas den Katalysator verstopfen und SO₃ als "Katalysatorgift" bekannt ist, sollte der SCR-Katalysator hinter dem Nasswäscher installiert werden, was allerdings nur mit einer Vorheizung möglich ist. Der Anlagentyp des Nasswäschers ist aufgrund seines Preises, seiner Komplexität, des Wartungsaufwandes, seiner Korrosionsanfälligkeit seines Energie- und Wasserbedarfs, der schlechten Kombinierbarkeit mit einem SCR-Katalysator, sowie aufgrund der Tatsache, dass Schadstoffe in die Meere geleitet werden für diese Anwendung weniger geeignet.

Als einfach im Betrieb, robust, wartungsarm und energiesparend und damit grundsätzlich für einen Betrieb auf hoher See geeignet, hat sich über Jahrzehnte hinweg aber eine Rauchgasreinigung als Schüttschichtabsorber nach dem Prinzip der Trockensorption, wie in der DE 83 35 361 U und der DE 33 44 571 C2 speziell für die Fluorsorption beschrieben, durchgesetzt.

In der DE 10 2010 016 004 A1 wird ein Verfahren zum trockenen Reinigen von Rauchgasen von Schiffsdieselantrieben beschrieben. Die Rauchgasreinigungsanlage umfasst einen Reaktor mit einer Schüttschicht aus granularen Absorbenzien. In dem Reaktor sind Zwischenböden, insbesondere in Form von zueinander beabstandeten Stahlplatte angeordnet, so dass ein Austragen der mit Schadstoffen belasteten Absorbenzien in einer Austragsrichtung aus der Schüttschicht in dem Reaktor in einen Auffangbehälter möglich ist. Die Zwischenböden verlängern den Strömungsweg des Gases durch die Schüttschicht auf ein Vielfaches der Breite des Reaktors durch den die zu reinigenden Abgase mit vom Verbrennungsprozess vorgegebenen Temperaturen bis max. 675 K hindurch geleitet werden. Um im Temperaturbereich nahe 675 K eine ausreichende Reinigungswirkung innerhalb des Reaktors speziell von Schwefeloxiden (SOₓ) zu erzielen, muss der Reaktor mit teueren, speziell synthetisch aufbereiteten basischen Absorbenzien in Granulatform auf Basis von Kalkhydrat (Ca(OH)₂) beschickt werden, welche unter hohem Energieaufwand hergestellt und nur von einer geringen Anzahl an Herstellern in unterschiedlichsten Qualitäten angeboten werden. Des Weiteren neigen die fragilen, offenporigen synthetischen Granulate dazu, dass sie bei geringer mechanischer Belastung, wie Reibung und Druck, zu Staub zerdrückt und unbrauchbar werden.

Dieses stellt nicht nur Probleme bei der Befüllung der Rauchgasreinigungsanlagen im Hafen dar, die nicht mehr durch Silo-LKW mit pneumatischer Förderung durchgeführt werden können, da weite Förderwege zu überbrücken sind. Es verbietet auch die Nutzung von im Schiff verteilten, für die Fracht nicht nutzbaren Räumen für die Zwischenlagerung des Granulats, wie z.B. im Rumpf, Heck und Bug. Kalkhydrat ist stark alkalisch und gilt nach Richtlinie 67/548//EWG als reizend auf Haut, Augen und Atemwege, so dass im Kontaktfall Schutzbrillen und Schutzhandschuhe getragen werden müssen und ein Einatmen möglichst vermieden werden soll. Für den Betrieb der Rauchgasreinigungsanlage werden daher eigens für diesen Zweck hergestellte Silocontainer zur Aufnahme des Kalkhydrats benötigt, die in ausreichender Menge zum Betrieb der Rauchgasreinigungsanlage auf dem Schiff mitgeführt werden müssen. Neben der logistischen Problematik mit dem synthetischen Kalkhydratgranulat kommt eine weitere Einschränkung hinzu. Sie äußert sich in einer direkten Abhängigkeit des Reinigungsgrades von der Abgastemperatur. Je weiter die vom Verbrennungsprozess erzeugte Abgastemperatur unterhalb der Temperatur von max. 675 K sinkt, desto schlechter reagiert das Schwefeldioxid (SO₂) mit dem verwendeten Kalkhydrat. Dieses steht jedoch im Gegensatz zu den Anforderungen an effiziente Verbrennungsprozesse mit hohen Wirkungsgraden, die sich durch eine minimale Abgastemperatur auszeichnen. Um trotz geringer Abgastemperaturen ein ausreichendes Reinigungsergebnis zu erhalten, suchen die Hersteller von Rauchgasreinigungsanlagen nach Lösungen, wie beispielsweise die Erhöhung des Verbrauchs an Absorbenzien, was jedoch mit einer schlechteren Ausbeute derselbigen einhergeht, die Entwicklung neuer, reaktiverer Absorbenzien, oder die Steigerung der Anlagengröße zur Verlängerung der Verweilzeit, wie in der DE 43 36 460 A1 beschrieben. Die Minderung von organischen Schadstoffen wie z. B. Dioxinen/Furanen, und von unvollständig verbrannten Kohlenwasserstoffen (VOC) ist mit den bekannten Rauchgasreinigungsanlagen nicht möglich.

Die Effizienz einer Reduktion von Ruß, welcher als krebserregend gilt, und gemäß der DE 10 2010 016 004 A1 durch eine Adsorption am Kalkhydrat stattfinden soll, muss kritisch betrachtet werden, da keine weitere Aufoxidation und somit keine einhergehende Schadstoffeliminierung des Rußes stattfindet, und er stattdessen mit dem Kalk ausgetragen werden soll. Neben der Sonderbehandlung des mit Ruß belegten Kalks ist zusätzlich ein kontinuierlicher Anstieg des Druckverlustes der Anlage zu befürchten, welches zu einer Abschaltung führen würde. Die im Patent beschriebene Reduktion von NOₓ mittels weiter modifizierter Granulate stellt nicht zuletzt aufgrund der begrenzten Verfügbarkeit des Sorptionsmittels und seiner Kosten keine brauchbare Lösung dar, so dass zusätzliche Reinigungsanlagen wie DeNOX - SCR Anlagen und evtl. Aktivkohlefilter dem Absorber nachgeschaltet werden müssen. Dieses schließt sich jedoch in vielen Anwendungsfällen aufgrund der Summe der Druckverluste über die unterschiedlichen Systeme, des Platzbedarfes und nicht zuletzt wegen der hohen Investitionskosten aus.

Neben den Emissionen aus schwerölbetriebenen Motoren entstehen Schadgase aus zahlreichen Verbrennungsprozessen in Öfen, wie z.B. Müll- und Klärschlammverbrennungen. Stetig sinkende Grenzwerte haben hier in den vergangenen Jahrzehnten mit einem hohen technischen Aufwand zu einem sehr guten Standard geführt. Je nach Abgaszusammensetzung bestehen moderne Rauchgasreinigungsverfahren aus einer Vielzahl hintereinandergeschalteter Aggregate, die bei unterschiedlichen Temperaturen, Feuchtigkeit, Druckverlusten und mit unterschiedlichsten Absorbenzien und Adsorbenzien die Schadgase reinigen. Bei den Absorbenzien, bzw. Adsorbenzien handelt es sich um Materialien die eventuell noch vor der Verwendung vom Anwender aufbereitet und konditioniert werden müssen. Sie liegen teilweise als flüssige und/oder ätzende Substanzen vor, die nicht nur erhöhte Sicherheitsauflagen erfordern, sondern auch die Entsorgungskosten erheblich verteuern. Neben der Komplexität der einzelnen Verfahrensschritte, sowie deren Interaktion untereinander, stellt nicht nur die Verfügbarkeit, sondern auch die Kosten für Wartung, Energie, Betriebsmittel und deren Entsorgung, aber auch die Anlageninvestitionen an den Betreiber hohe Anforderungen. Eine Vereinfachung der Reinigungsverfahren mit einem geringeren Energieaufwand, sowie der Wechsel hin zu günstigen, nicht toxischen Betriebsmitteln in Verbindung mit günstigen Entsorgungskosten ist daher der Antrieb für weitere Innovationen in diesem Bereich.

Die DE 43 07 007 A1 offenbart ein Verfahren, welches ebenfalls auf dem Prinzip des Schüttschichtfilters beruht. Es wird vorgeschlagen, durch Abkühlung der Rauchgase auf unter 1125 K und Umwandlung von Kalkstein (CaCO₃) in Kalziumoxid (CaO) neben Fluorwasserstoff (HF) zusätzlich Chlorwasserstoff (HCl) und Schwefeloxide (SOₓ) zu beseitigen. Es hat sich jedoch als nicht praktikabel herausgestellt, da die zu reinigenden Rauchgase zur Temperaturminderung vor und nach dem Reinigungsprozess mit Frischluft gemischt werden müssen, welches eine unzulässige Verdünnung derselbigen zur Folge hat. Zudem laufen die chemischen Reaktionen der einzelnen Schadstoffe bei unterschiedlichen Temperaturen ab und nicht bei einer einheitlichen Kalktemperatur. Schließlich fallen die Reaktionsprodukte CaSO₃, CaSO₄, CaF₂, CaCl₂ neben dem ätzenden, nicht reagierten CaO bei Temperaturen von 1125 K an, welches das weitere Handling sehr erschwert.

Die AT 400 006 B offenbart ein zweistufiges Verfahren zur thermisch-regenerativen Reinigung von organischen und/oder anorganischen Kohlenstoffverbindungen sowie SO₂ und SO₃ enthaltenden Abgasen. Die Vorrichtung zur Durchführung des Reinigungsverfahrens umfasst einen in Strömungsrichtung des Abgases gesehen ersten Regeneratorturm mit darin angeordneten keramischen Wärmespeicherkörpern zur Erwärmung des zu reinigenden Abgasstromes, eine sich an den ersten Regeneratorturm anschließende Brennkammer zur Zuführung von zusätzlicher Energie, einen sich an die Brennkammer anschließenden zweiten Regeneratorturm mit darin angeordneten keramischen Wärmespeicherkörpern sowie Steuereinrichtungen zur Umkehr der Gasströmung durch die Regeneratortürme. In der jeweiligen Strömungsrichtung des Abgases gesehen hinter der Einrichtung zum Erwärmen des Gasstromes ist ein SOₓ Katalysator und eine SO₃ Absorptionsanlage angeordnet. Die Absorptionsanlage wird mit kleinstückigem gebranntem Kalk beschickt, an welchem SO₃ beziehungsweise H₂SO₄ absorbiert und so aus dem Abgasstrom entfernt wird, was den zweiten Reinigungsschritt des zweistufigen Reinigungsverfahrens darstellt.

**Aufgabe** der Erfindung ist es, das Verfahren und die Anlage der gattungsgemäßen Art so weiterzuentwickeln, dass es als ein einem Verbrennungsprozess nachgeschaltetes Verfahren einsetzbar ist, wobei die erforderliche Reduzierung der Schadstoffe des Abgases, insbesondere von Schwefeloxid (SOₓ) und gleichzeitig auch die Reduktion von Stickoxiden (NOₓ), Halogenverbindungen wie Fluorwasserstoff (HF) und Chlorwasserstoff (HCl), organischen Schadstoffen wie Ruß, Dioxinen/Furanen und unvollständig verbrannten Kohlenwasserstoffen (VOC) sowie Schwermetallen, ohne synthetische Absorbenzien erreicht und deren Reaktion mit den Schadstoffen verbessert wird.

Außerdem sollen die Anlagenverfügbarkeit und die Betriebsdauer erhöht, sowie die Betriebs- und Wartungskosten, die Störanfälligkeit, die Baugröße, die Komplexität, der Einsatz natürlicher Ressourcen (z.B. Energie), und die damit verbundene CO₂ - Bilanz derartiger Anlagen entscheidend gesenkt werden.

Diese Aufgabe wird durch ein dem Verbrennungsprozess nachgeschaltetes Verfahren nach Anspruch 1 sowie eine Anlage nach Anspruch 7 gelöst. Vorteilhafte Ausgestaltungen der Erfindung ergeben sich aus den Unteransprüchen.

Das dem Verbrennungsprozess nachgeschaltete Verfahren zeichnet sich dabei durch seine Abgastemperaturunabhängigkeit aus. Das Verfahren dient zur Emissionsminderung von Abgasen aus Verbrennungsprozessen in Öfen und Verbrennungsmotoren. Es findet insbesondere Anwendung bei Verbrennungsprozessen auf die kein äußerer Einfluss genommen werden kann, oder deren Abgase nicht das zur Abgasreinigung gewünschte Temperaturniveau aufweisen, wie z.B. Verbrennungsmotoren von Schwerölkraftwerken und unter erschwerten Bedingungen von schwerölbetriebenen Schiffen.

Bei dem Verfahren kommen zur Abgasreinigung Schüttschichten der Absorbenzien in jedem Absorptionsbereich zum Einsatz, die aus Kalkstein (CaCO₃) oder Dolomit (CaCO₃-MgCO₃) bestehen. Die Schüttschichten werden in jedem Absorptionsbereich von einem gesonderten Behälter / Reaktor aufgenommen, der an seiner Oberseite einen Einlass für mit Schadstoffen unbelastete Absorbenzien und an seiner Unterseite einen Auslass für den kontinuierlichen oder diskontinuierlichen Austrag für mit Schadstoffen belastete Absorbenzien aufweist. Der Einsatz synthetischer Absorbenzien zur vollständigen Abgasreinigung ist nicht erforderlich. Kalkstein oder Dolomit sind Naturstoffe, die ohne zusätzliche energieaufwändige Verarbeitungsschritte, mit geringer CO₂-Bilanz, weltweit auf allen Kontinenten von einer Vielzahl unterschiedlicher Lieferanten in großen Mengen und unterschiedlichsten Qualitäten preiswert zur Verfügung stehen. Die Mohssche Härte von 3 - 4 erlaubt eine Logistik mit Silo-LKWs und pneumatischen Förderungen, wobei Kalkstein und Dolomit weder als toxisch, noch als ätzend eingestuft und somit unproblematisch bei Transport und Lagerung, insbesondere auch auf Schiffen sind.

Mit dem vorgeschlagenen nachgeschalteten Verfahren wird ein effizientes Abgasreinigungsverfahren für die in der Aufgabenstellung aufgeführten Schadstoffe möglich, das speziell für die Bedingungen auf Schiffen geeignet ist. Das Verfahren kann platz- und energiesparend, preisgünstig, robust, wartungsarm, betriebsmittelunabhängig und wasserlos in allen Teilen der Welt betrieben werden. Außerdem lässt sich das Verfahren temperatur- und prozessunabhängig und daher ohne Eingriffe in den vorgeschalteten Verbrennungsprozess anwenden. Die Vielzahl an genannten Schadstoffen wird mit einem einzigen Verfahren und innerhalb einer Anlage eliminiert. Wird die Anlage druckseitig betrieben, erübrigt sich aufgrund der geräuschdämpfenden Eigenschaften der Absorbenzien die Installation eines Schalldämpfers hinter der Abgasreinigung.

Die Aufteilung der Absorptionsanlage in mindestens zwei voneinander getrennte Absorptionsbereiche, nämlich mindestens einen ersten und mindestens einen zweiten Absorptionsbereich in Verbindung mit der wiederholten Änderung der Flussrichtung der durch die Absorptionsanlage hindurch geleiteten Abgase dient dazu, die zu reinigenden Abgase zum einen schon vor dem Eintritt in den zwischen jedem ersten und jedem zweiten Absorptionsbereich angeordneten Heizbereich zu erwärmen und andererseits den Abgasen nach Durchlaufen des Heizbereichs wieder möglichst viel Wärme zu entziehen. Durch diesen ständigen gegenseitigen Wärmeaustausch zwischen den Abgasen und den Absorbenzien in dem ersten und dem zweiten Absorptionsbereich kann die Anlage mit einem thermischen Wirkungsgrad von mehr als 95 % betrieben werden.

Im Betrieb durchströmt das kalte Abgas zuerst die Absorbenzien im ersten Absorptionsbereich I, der durch das wiederholte Ändern der Flussrichtung der Abgase aufgeheizt ist. Das kalte Abgas kühlt die Absorbenzien in dem Absorptionsbereich I und erwärmt sich dabei. Entspricht die Abgastemperatur nach dem Verlassen des Absorptionsbereichs I nicht der gewünschten Temperatur, wird diese im Heizbereich auf das gewünschte Niveau angehoben. Nach dem Verlassen des Heizbereichs durchströmt das heiße Abgas die Absorbenzien im zweiten Absorptionsbereich II, wobei das heiße Abgas die Absorbenzien erwärmt und sich dabei abkühlt. Durch diesen Wärmeaustausch zwischen Abgas und Absorbenzien werden die Absorbenzien im Absorptionsbereich I immer kälter, wohingegen die Absorbenzien im Absorptionsbereich II immer wärmer werden. Als Folge ergibt sich für das Abgas eine schlechtere Aufheizung im Absorptionsbereich I, welche durch zusätzliche Energiezufuhr im Heizbereich kompensiert werden muss, und es ergibt sich gleichzeitig eine schlechtere Abkühlung des Abgases aufgrund der stetig heißer werdenden Absorbenzien im Absorptionsbereich II, sodass das Abgas nach dem Verlassen des Absorptionsbereichs II kontinuierlich heißer wird. Um diesen Prozess zu unterbrechen, wird die Flussrichtung, insbesondere temperaturgesteuert, wiederholt während der Abgasreinigung geändert, sodass das kalte Abgas den aufgeheizten Absorptionsbereich II durchströmt, dabei die Absorbenzien kühlt und sich erwärmt. Anschließend wird im Heizbereich das Abgas auf die gewünschten Temperatur angehoben, um dann den abgekühlten Absorptionsbereich I zu durchströmen, um dabei die Absorbenzien zu erwärmen und sich abzukühlen. Durch das wiederholte Ändern der Flussrichtung wird eine Überschreitung einer festgelegten Temperaturdifferenz zwischen der Einleitungs-Temperatur des mit Schadstoffen belasteten Abgases vor Einleitung in die Absorptionsanlage und der Ausleitungs-Temperatur des gereinigten Abgases nach Ausleitung aus der Absorptionsanlage vermieden.

Der Heizbereich in dem nachgeschalteten Verfahren nach Anspruch 1 ist vorzugsweise für die Erwärmung des Abgases auf maximale Abgastemperaturen bis 1375 K ausgelegt; in dem Heizbereich herrschen während der gesamten Abgasreinigung stets die höchsten Temperaturen. Der Heizbereich verfügt über eine elektrische Heizung, oder aber über einen/mehrere Gas- oder Öl- bzw. Schwerölbrenner mit Verbrennungslufteindüsung. In dem Heizbereich ist das Temperaturniveau, auf das das Abgas erwärmt wird, frei einstellbar. Durch die Temperaturgefälle, welche sich ausgehend von dem Heizbereich entlang des Strömungswegs der Abgase, insbesondere zwischen Kalt- und Heißgaskanälen, innerhalb der Schüttschichten des ersten und zweiten Absorptionsbereichs einstellen, wird sowohl eine Entschweflung der Abgase (SO₂) bei hohen Temperaturen, als auch eine Abscheidung anderer saurer anorganischer Abgasbestandteile (z.B. SO₃, HF, HCl) bei niedrigeren Temperaturen erreicht. So vereinen das erfindungsgemäße Verfahren und die Anlage Funktionen in sich, die sonst von mehreren unabhängigen Systemen übernommen werden müssten. Mit dem erfindungsgemäßen Verfahren lässt sich eine Entschweflung von SOₓ in Größenordnungen von mehr als 95 % des im Abgas enthaltenen Schadstoffes erreichen. Schwermetalle beginnen sogar erst bei Temperaturen oberhalb von ca. 1225 K sich durch Adsorption an basischen Absorbenzien anzulagern. Bedingt durch das vorhandene Temperaturgefälle mit unterschiedlichen Reaktionstemperaturen in jedem Absorptionsbereich lassen sich aufgrund der hohen erreichbaren Temperaturen angelagerte Schwermetalle zusammen mit den Absorbenzien in Austragsrichtung austragen.

Erfindungsgemäß ist daher eine Einhaltung niedriger Abgasgrenzwerte nun auch mit einem kostengünstigen Trockenreinigungsverfahren sowie einer Anlage zu dessen Durchführung möglich. Darüber hinaus wird eine bessere Ausnutzung der Absorbenzien bedingt durch das vorhandene Temperaturgefälle mit unterschiedlichen Reaktionstemperaturen in jedem Absorptionsbereich erreicht.

Darüber hinaus hat die erfindungsgemäße Vorrichtung den Vorteil, dass durch den zwischengeordneten Heizbereich zusätzlich zur Absorption anorganischer Schadstoffe auch eine Aufoxidation organischer Substanzen, wie beispielsweise Dioxine/Furane, und unvollständig verbrannter Kohlenwasserstoffe (VOC), die oftmals in Abgasen vorhanden sind, möglich ist. Die Oxidation derartiger Stoffe findet üblicherweise bei Temperaturen oberhalb von 1025 K mit Reduktionsgraden von über 95 % statt, die in dem zwischengeschalteten Heizbereich durch den Einsatz von elektrischen Heizungen, oder aber Gas- oder Öl-, bzw. Schwerölbrenner(n) problemlos erreichbar sind. Ruß, welcher als unverbrannter Kohlenstoff in Form von Staub im Abgas enthalten ist, wird entweder beim Eintritt in den Absorptionsbereich an die Oberfläche der Absorbenzien, insbesondere der Kalkschüttung angelagert, oder aber spätestens beim Durchqueren des Absorptionsbereichs bzw. des Heizbereichs direkt bei Temperaturen oberhalb von 875 K verbrannt. Die angelagerten Rußpartikel, die nicht unmittelbar verbrennen, verbrennen beim Passieren der Heißgaskanäle wenn die Absorbenzien in Austragsrichtung weiter bewegt werden.

Zur Erlangung niedriger Strömungsgeschwindigkeiten weist jeder Absorptionsbereich bei einer Anlage zur Durchführung des nachgeschalteten Verfahrens eine Vielzahl von Gasverteilerkanälen auf, die derart in jedem Absorptionsbereich angeordnet sind, dass das Abgas und/oder die Luft die Schüttschicht durchströmt. Die Gasverteilerkanäle teilen den Gasstrom aus Abgasen oder Luft vorzugsweise derart auf, dass die Schüttschicht der Absorbenzien, quer zur Austragsrichtung und sowohl in als auch entgegen der Austragrichtung der Absorbenzien durchströmt werden.

Ein Teil der Gasverteilerkanäle jedes Absorptionsbereichs mündet vorzugsweise in einer Gassammelhaube, wobei jeder Reaktor zur Aufnahme der Schüttschicht eines Absorptionsbereichs über eine eigene Gassammelhaube verfügt. Die Einleitung der schadstoffbelasteten Abgase und die Ableitung der gereinigten Abgase aus jedem Absorptionsbereich erfolgt über die Gassammelhaube. Die Gassammelhaube jedes Absorptionsbereichs verfügt hierzu über eine Rohgas- bzw. Einlassklappe und eine Reingas- bzw. Auslassklappe, die unabhängig voneinander in eine Öffnungs- oder Schließstellung bringbar sind, wobei zur Einleitung des mit Schadstoffen belasteten Abgases oder der Luft die Rohgas- bzw. Einlassklappe geöffnet wird und zur Ableitung des gereinigten Abgases die Reingäs- bzw. Auslassklappe geöffnet wird.

Die zur Einleitung der Schadstoff belasteten Abgase und die Ableitung der gereinigten Abgase aus jedem Absorptionsbereich erforderlichen Gasverteilerkanäle werden auch als Kaltgaskanäle (bis 675 K) bezeichnet. Die übrigen Kanäle jedes Absorptionsbereichs, die in dem Heizbereich münden bzw. mit dem Heizbereich in gasleitender Verbindung stehen, werden auch als Heißgaskanäle (bis 1375 K) bezeichnet.

Die Gasverteilerkanäle sind in jedem Absorptionsbereich vorzugsweise in mehreren Reihen nebeneinander angeordnet. Gleichzeitig befinden sich mehrere Reihen dieser Verteilerkanäle übereinander. Die oberste und unterste Reihe jedes Absorptionsbereichs weist vorzugsweise ausschließlich Kaltgaskanäle auf, um eine unerwünschte Wärmeenergieabfuhr über den Einlass für mit Schadstoffen unbelastete Absorbenzien und über den Auslass für den Austrag für mit Schadstoffen belastete Absorbenzien zu verhindern. Des Weiteren sorgen die unteren Kaltgaskanäle dafür, dass aufgrund der dort herrschenden niedrigen Temperaturen auf dem Niveau der Temperatur des in den Kaltgaskanal eingeleiteten Abgases und den hohen CO₂ - Gehalt im Abgas nicht reagiertes CaO und MgO zu unschädlichem CaCO₃ und MgCO₃ rekarbonadisiert, um einen unproblematischen Umfang mit dem Reaktionsprodukt zu gewährleisten.

Um die Absorptionsbereiche für die Durchführung des nachgeschalteten Verfahrens strömungstechnisch effizient, temperaturresistent und so klein wie möglich zu gestalten, sind sowohl die Kalt- als auch die Heißgaskanäle im Vergleich zum Stand der Technik durch technische Innovationen, strömungs- und konstruktionstechnisch optimiert worden:
1. Die Querschnittsform der Gasverteilungskanäle (Kaltgas- und Heißgaskanäle) entspricht nicht wie im Stand der Technik der Form eines Dreiecks "Dachs", sondern vorzugsweise der eines Vielecks, insbesondere in "Hausform". An einer Stirnseite weist jeder Kanal eine Öffnung auf. Die gegenüberliegende Stirnseite ist geschlossen. Der in dem Absorptionsbereich verbaute Gasverteilerkanal ist an seiner Unterseite offen.
2. Der vieleckige Querschnitt erlaubt eine große stirnseitige Öffnung in jedem Kaltgas- und jedem Heißgaskanal sowie bei abnehmender Querschnittsfläche des Kanals in dessen Längsrichtung ausgehend von der stirnseitigen Öffnung eine gleichbleibend große Öffnung an der Unterseite. Die stirnseitige Öffnung und die Öffnung an der Unterseite können nun unabhängig voneinander, bei beliebigen Breiten, Höhen und Längen der Kanäle für einen vorgegebenen Volumenstrom mit jeweils optimalen Strömungsgeschwindigkeiten individuell ausgelegt werden.
3. Die Gaskanäle werden auf ihrer Länge mit Strömungsgeschwindigkeiten von 100 % an der vorderen stirnseitigen Öffnung und 0 % an der geschlossenen hinteren Stirnseite durchströmt. Der Gasverteilerkanal in vieleckiger Querschnittsform in "Hausform", kann mit abnehmenden Kanalquerschnitt ausgehend von der stirnseitigen Öffnung erzeugt werden, in dem die Höhe der seitlichen, den Kanal begrenzenden Wände in Richtung der geschlossen Stirnseite abnimmt. Hierdurch kann etwa 50 % des Kanalvolumens eingespart werden und die Anlage kann mit zusätzlichem Kalk befüllt werden.
4. Auf den Gasverteilerkanälen lastet die gesamte Masse der Absorbenzien (Kalkmasse) jedes Absorptionsbereichs. Bei höheren Temperaturen nimmt die Festigkeit der Konstruktionsmaterialien der Gasverteilerkanäle jedoch ab, was insbesondere für die Heißgaskanäle problematisch werden kann. Dank der vieleckigen Querschnittsform "Hausform" kann ein in Strömungsrichtung abfallendes Leitblech zur Gasführung in den im Querschnitt vieleckigen Gasverteilerkanal eingebaut werden, welches durch das unter dem Leitblech strömende Abgas thermisch hoch belastet wird. Der Zwischenraum zwischen dem Dach des Gasverteilerkanals und dem Leitblech kann indes mit isolierenden Materialien gegen die hohen Temperaturen gedämmt werden, sodass das Dach thermisch weniger belastet wird und daher in einem kälteren Bereich der Absorbenzien seine Festigkeit behält. Die Tragfunktion der im Querschnitt vieleckigen Gasverteilerkanäle wird daher durch hohe Temperaturen nicht beeinträchtigt.
5. Zur Erlangung gleicher Strömungsgeschwindigkeiten in allen Kalt-und Heißgaskanälen eines Absorptionsbereichs, steht die Größe der Gesamtfläche bestehend aus sämtlichen unteren Öffnungen aller **Kaltgaskanäle** zu der Gesamtfläche bestehend aus sämtlichen unteren Öffnungen aller **Heißgaskanäle** im selben Verhältnis, wie die in allen Kaltgaskanälen und die in allen Heißgaskanälen herrschenden Abgastemperaturen (hier: 675 K / 1375 K = ca. 0,5).
   Außerdem steht zur Erlangung gleicher Strömungsgeschwindigkeiten in allen Kalt- und Heißgaskanälen des Absorptionsbereichs, die Größe der Gesamtfläche bestehend aus sämtlichen stirnseitigen Öffnungen aller **Kaltgaskanäle** zu der Gesamtfläche bestehend aus sämtlichen stirnseitigen Öffnungen aller **Heißgaskanäle** im selben Verhältnis, wie die in allen Kaltgaskanälen und die in allen Heißgaskanälen herrschenden Abgastemperaturen (hier: 675 K / 1375 K = ca. 0,5).
6. Um die zu den Adsorbenzien (Kalk) offene Fläche jedes Gasverteilerkanals zu vergrößern weist jeder Gasverteilerkanal in einer Ausgestaltung der Erfindung zusätzlich zu der offenen Unterseite teilweise geöffnete Seitenwände auf. Die Seitenwände können durch mehrere im Abstand zueinander angeordnete Lamellen gebildet werden, wobei jede Lamelle derart angeordnet ist, dass die von oben nachgeführten Absorbenzien von den Lamellen an der Außenseite des Kanals entlang geführt werden, nicht jedoch über die Öffnungen in das Innere des Kanals gelangen.

Der Brenner zum Betrieb des Ofens in dem Heizbereich ist vorzugweise so konzipiert, dass in dem Heizbereich die separierten Bestandteile aus der Schwerölaufbereitung, die derart verunreinigt sind, dass sie nicht als Treibstoff für einen Verbrennungsmotor geeignet sind, der sogenannte "Sludge", der durchaus einen hohen Brennwert aufweist, ohne weitere Vorbehandlung in dem Heizbereich als Brennstoff mitverwendet werden können. Durch die thermische Verwertung des "Sludge" verringert sich nicht nur die benötigte Menge an Gas, bzw. Öl oder Schweröl, es entfällt außerdem dessen teure Entsorgung als Sondermüll an Land. Der Sludge hält nicht nur unter Ausnutzung seiner Verbrennungsenergie die Temperatur im Heizbereich aufrecht, sondern dessen organische Schadstoffe wie Ruß, Dioxine/Furane und unvollständig verbrannte Kohlenwasserstoffe (VOC) werden bei Temperaturen oberhalb von 1025 K zu anorganischen Verbindungen wie (HF), (HCl), (SOₓ), (NOₓ) oxidiert, die beim Durchströmen des folgenden Absorptionsbereichs mit den Absorbenzien reagieren.

Durch das erfindungsgemäße Verfahren ist es nunmehr möglich, eine Reinigung industrieller Abgase, sowie die Abgase von schwerölbetriebenen Verbrennungsmotoren unabhängig von ihrer Abgastemperatur durch natürlichen Kalk oder Dolomit für SOₓ, HF, HCl, NOₓ, organische Schadstoffe wie Ruß, Dioxine/Furane und unvollständig verbrannte Kohlenwasserstoffe (VOC), sowie für Schwermetalle auf kostengünstige Weise bei geringsten Energiekosten zu gewährleisten und dieses ohne die zur Zeit kostenpflichtige thermische Entsorgung des "Sludge" in Verbrennungsanlagen an Land.

Als Absorbenzien kommen vorzugweise reiner Kalkstein oder Dolomit in Betracht. Für die Verwendung in den erfindungsgemäßen Verfahren brauchen Kalk und Dolomit nur mehr so gebrochen zu werden, dass sich Korngrößen im Bereich von 2 mm - 25 mm ergeben. Eine kostenintensive Aufbereitung der Absorbenzien entfällt hiermit vollständig, weil die Anlage grundsätzlich so konzipiert ist, dass durch die wiederholt angeordneten Reihen an Heißgaskanäle der Kalk bzw. das Dolomit durch den Kontakt mit den beheizten Abgasen konditioniert wird. Dieses geschieht dadurch, dass der gesamte Kalk bzw. Dolomit bis zum Erreichen der Heißgaskanäle auf bis zu 1375 K erhitzt wurde. Dieses löst bei Temperaturen oberhalb von 1085 K eine erste Aktivierung der Oberfläche aus und endet mit der vollständigen Umwandlung des CaCÖ₃ und MgCO₃ unter Abgabe von CO₂ zu Kalziumoxid (CaO) und Magnesiumoxid (MgO) - Granulat bei 1175 K. Diese Stoffe sind nicht nur Ausgangsmaterial für alle synthetischen kalk- und dolomitbasierten Absorbenzien, sondern sind in ihrer reinen Form als CaO und MgO auch reaktionsfreudiger als CaCO₃, MgCO₃ bzw. Ca(OH)₂. Oberhalb von 1085 K kann das reaktionsträgere SOₓ nun ungehindert zu CaSO₄ und MgSO₄ reagieren. Fällt die Temperatur wieder ab, wird durch den hohen CO₂ - Gehalt im Abgas eine Rekarbonadisierung des unreagierten CaO, MgO zurück zu CaCO₃, MgCO₃ ausgelöst. Auf ihrem Weg durch den Absorptionsbereich werden die Absorbenzien noch weitere Umwandlungen erfahren und zwar jedes Mal, wenn sie als Schüttschicht die heißen Bereiche durchlaufen. So wird in regelmäßigen Abständen für eine ausreichende Reaktivität des Kalkes/Dolomits gesorgt. Zudem begünstigt die hohe mittlere Kalktemperatur von ca. 750 K - 1000 K eine schnelle Diffusion der Schadstoffe in tiefere Bereiche des Kalk- oder Dolomitkerns hinein, welches eine bessere Umsetzung der Absorbenzien mit sich bringt. Dieses vermindert nicht nur erheblich den Bedarf an Frischkalk, und das dafür vorgesehene Lagervolumen an Bord eines Schiffs, es verringert auch im selben Maße die Entsorgungskosten des Reaktiönsmaterials.

Darüber hinaus hat das erfindungsgemäße nachgeschalteten Verfahren den Vorteil, dass durch den zwischengeordneten Heizbereich zusätzlich zur Absorption anorganischer Schadstoffe auch eine Aufoxidation organischer Substanzen, wie beispielsweise Dioxine/Furane, und unvollständig verbrannter Kohlenwasserstoffe (VOC), die oftmals in Abgasen vorhanden sind, möglich ist. Die Oxidation derartiger Stoffe findet üblicherweise bei Temperaturen oberhalb von 1025 K mit Reduktionsgraden von über 95 % statt, die in dem zwischengeschalteten Heizbereich durch den Einsatz von elektrischen Heizungen, oder aber Gas- oder Öl-, bzw. Schwerölbrenner(n) problemlos erreichbar sind.

Bei einer gleichzeitigen Eindüsung von Harnstoff (CH₄N₂O), Ammoniak (NH₃) oder Ammoniakwasser (NH₄OH) in die Rohgasrohrleitung, bzw. direkt in den Heizbereich, wird bei Temperaturen im Bereich oberhalb von 1125 K zusätzlich der Schadstoff NOₓ in Größenordnungen von über 90 % zu elementarem N₂ reduziert.

Für das nachgeschaltete Verfahren hat es sich als vorteilhaft erwiesen, dass die Absorptionsanlage um mindestens einen weiteren, oder aber auch um 3, 5, 7, etc. Absorptionsbereiche mit jeweils einer weiteren Schüttschicht aus Absorbenzien erweitert werden. Die weiteren Absorptionsbereiche wirken ebenfalls paarweise als erste und zweite Absorptionsbereiche mit dem dazwischen angeordneten Heizbereich zusammen. Durch eine nun ungerade Anzahl an Absorptionsbereichen mit dem zwischengeschalteten Heizbereich ergibt sich die Möglichkeit, dass jeweils eine gerade Anzahl an ersten und zweiten Absorptionsbereichen und der allen Absorptionsbereichen gemeinsame Heizbereich von den zu reinigenden Abgasen durchströmt wird. Unterdessen kann ein nicht im Reinigungsbetrieb befindlicher weiterer Absorptionsbereich im Spülmodus durch ein so genanntes Spülluftgebläse mit Frischluft versorgt werden, der die innerhalb des Absorptionsbereichs noch vorhandenen Abgase über den Heizbereich in die im Reinigungsbetrieb befindlichen Absorptionsbereiche zurückdrückt und somit einer Reinigung zuführt. Auf diese Weise lassen sich Schadstoffspitzen während der Umschaltung der Flussrichtung der Abgase durch die einzelnen Absorptionsbereiche verhindern. Nach Beendigung des Spülmodus wird der weitere Absorptionsbereich wieder in Betrieb genommen und wirkt mit einem anderen ersten Absorptionsbereich als zweiter bzw. einem anderen zweiten Absorptionsbereich als erster Absorptionsbereich über den dazwischen angeordneten Heizbereich zusammen, während der zuvor mit dem anderen ersten oder zweiten Absorptionsbereich zusammenwirkende Absorptionsbereich in den Spülmodus geht. Im Spülmodus eines Absorptionsbereichs sind stets beide Klappen geschlossen, während die Rohgas- bzw. die Reingasklappe an den Sammelhauben von den beiden jeweils zusammenwirkenden Absorptionsbereichen geöffnet sind. Für die Umschaltung der Flussrichtung der Abgase durch die Absorptionsanlage ist, wie bereits weiter oben erläutert, entweder die Rohgas- oder die Reingasklappe an den Sammelhauben von jeweils zwei zusammenwirkenden Absorptionsbereichen geöffnet.

Darüber hinaus ist es bei nebeneinander angeordneten Absorptionsbereichen sinnvoll, dass jeder Absorptionsbereich an seinem Auslass für die mit Schadstoff belasteten Absorbenzien mit mindestens einem automatisch arbeitenden Austragsorgan, wie beispielsweise einer Zellradschleuse, einer Austragsschnecke oder einem Schiebersystem versehen ist. Dieses Austragsorgan entfernt den mit Schadstoffen belasteten Teil der Schüttschicht des jeweiligen Absorptionsbereichs kontinuierlich oder in Intervallen. Die automatisch arbeitenden Austragsorgane gewährleisten gleichmäßige Reingaswerte und einen stationären Betriebspunkt, da sie für einen Austausch derjenigen Absorbenzienanteile sorgen, die infolge ihrer Schadstoffaufnahme nicht mehr genügend Reaktionsfähigkeit aufweisen. Sonstige, nicht brennbare Partikel oder Stäube, die sich ebenfalls im Abgas befinden können und sich an den Absorbenzien anlagern, werden ebenfalls mit ausgetragen. Eine übermäßige Ablagerung dieser Partikel und Stäube, sowie die damit verbundene Abschaltung der Anlage durch überhöhten Druckverlust, werden dadurch verhindert.

Zweckmäßig ist es darüber hinaus, dass den Austragsorganen der Absorptionsbereiche eine oder mehrere Reibvorrichtungen in Kombination mit einer oder mehreren Rezirkulationsvorrichtungen nachgeschaltet sind. Die Rezirkulationsvorrichtung(en) tragen dazu bei, die Wirtschaftlichkeit des erfindungsgemäßen Verfahrens sowie der Anlage ca. um den Faktor 2 zu erhöhen. Nach dem Austragen der Absorbenzien aus dem jeweiligen Absorptionsbereich werden die kontaminierten Absorbenzien der Reibvorrichtung zugeführt, welche die bereits mit den Abgasschadstoffen reagierte Oberfläche der Absorbenzien abreibt, sodass wieder eine reaktionsfähige Oberfläche entsteht. Nach dem Reibvorgang können durch eine geeignete Siebvorrichtung diejenigen Absorbenziengranulate abgesiebt werden, die eine bestimmte Mindestkorngröße unterschreiten. Nach dem Siebvorgang werden die nunmehr wieder reaktionsfähigen Absorbenzien mittels Schleusen (z.B. Kammer- oder Zellenradschleusen) einer oder mehreren Rezirkulationsvorrichtung(en) zugeführt, die für ein Wiedereinbringen der Absorbenzien in die die Absorptionsbereiche bildenden Reaktoren sorgen.

Anhand der Zeichnungen wird die Erfindung näher erläutert:
- Fig. 1: zeigt eine Prinzipskizze des nachgeschalteten Verfahrens,
- Fig. 2a: zeigt eine Prinzipskizze der Phase I des nachgeschalteten Verfahrens,
- Fig. 2b: zeigt eine Prinzipskizze der Phase II des nachgeschalteten Verfahrens,
- Fig. 3: zeigt eine Prinzipskizze einer Anlage zur Durchführung des nachgeschalteten Verfahrens,
- Fig. 4a-f: zeigen Teilbereiche eines Absorptionsbereichs in unterschiedlichen Varianten.

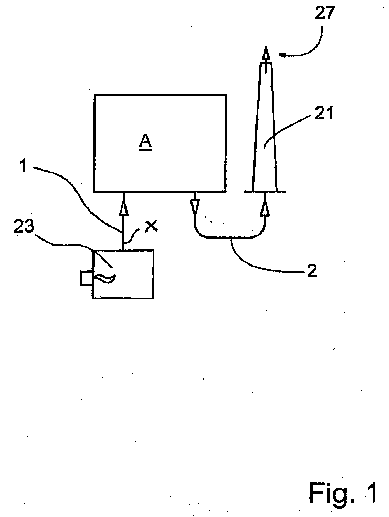

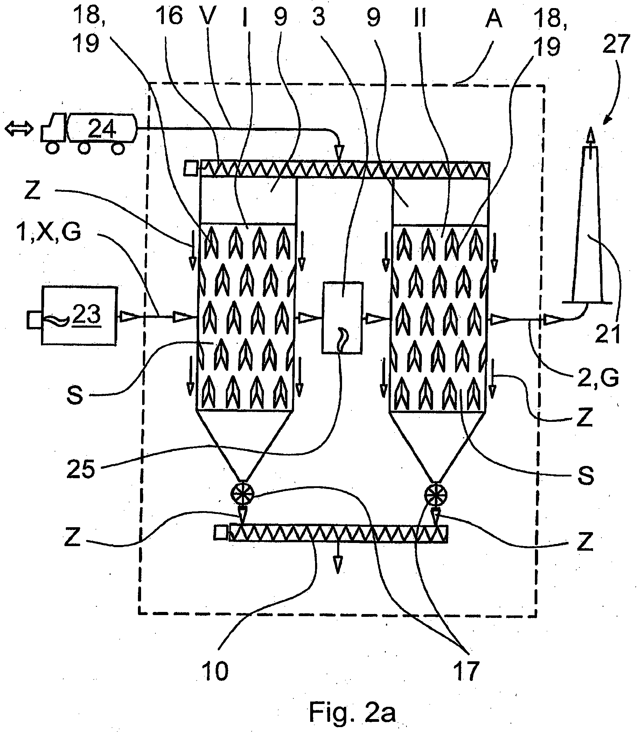

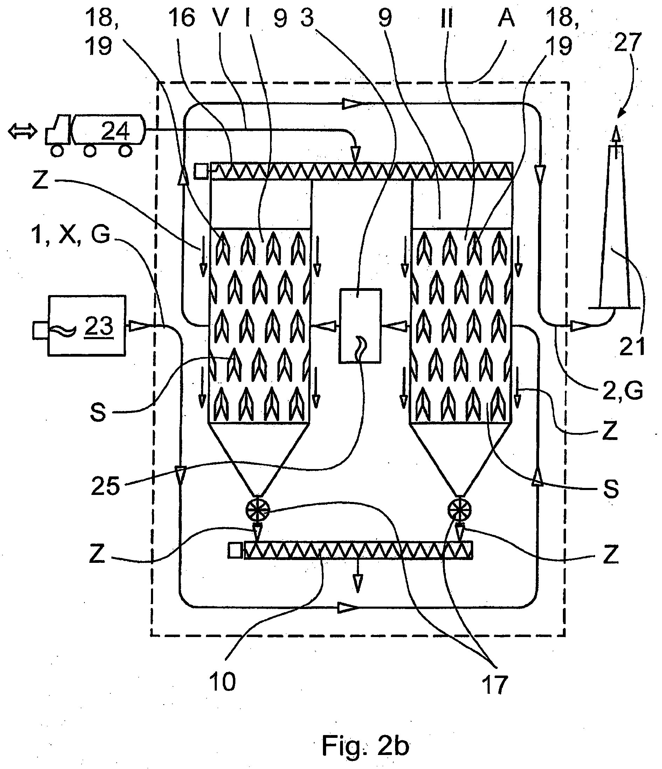

Figur 1 zeigt sehr abstrakt das Grundprinzip des nachgeschalteten Verfahrens. Aus dem Verbrennungsprozess 23, beispielsweise eines Schiffsdieselantriebs, wird das belastete Abgas X über eine Rohgasleitung 1 einer Absorptionsanlage A zugeführt und dort trocken gereinigt. Die Einzelheiten des Reinigungsprozesses werden anhand der Figuren 2a, 2b näher erläutert. Das gereinigte Abgas verlässt die Absorptionsanlage A über eine Reingasleitung 2 und wird über einen Kamin 21 der Atmosphäre 27 zugeführt. Die Strömungsenergie des Abgases resultiert insbesondere aus dem Abgasdruck des Antriebs. Zusätzlich kann ein im Saugbetrieb arbeitender Ventilator für das gereinigte Abgas in der zum Kamin 21 führenden Reingasleitung 2 angeordnet sein.

Figur 2a zeigt den Verbrennungsprozess 23 bei dem verunreinigtes Abgas X entsteht, welches der Absorptionsanlage A für das nachgeschaltete Verfahren zugeführt wird. Die Absorptionsanlage A umfasst einen ersten Absorptionsbereich I und einen zweiten Absorptionsbereich II. Zwischen den beiden Absorptionsbereichen ist ein Heizbereich 3 angeordnet, in dem das Abgas auf eine bestimmte Solltemperatur angehoben wird, bevor es dem zweiten Absorptionsbereich II zugeführt wird. Jeder der Absorptionsbereiche verfügt über eine Vielzahl von Gasverteilerkanälen 18, 19, durch die das Abgas durchgeführt wird und dabei die Schüttschicht S aus Absorbenzien durchströmt, bevor es den Absorptionsbereich verlässt. Die Schüttschicht S kann über die Zufuhr V in die Absorptionsbereiche nachgeführt werden. Verbrauchtes, mit Schadstoffen des Abgases belastete Absorbenzien werden über die Sammelschnecke 10 aus den Absorptionsbereichen I, II zusammengeführt und entweder wieder aufbereitet und der Zufuhr V, oder der Entsorgung zugeführt. Die Pfeile Z symbolisieren die Austragsrichtung der Schüttschicht S und die Pfeile G die Flussrichtung des Abgases X, auf seinem Weg bis in die Atmosphäre 27.

Im Betrieb durchströmt das kalte Abgas zuerst die Absorbenzien (Kalk) im ersten Absorptionsbereich I, der durch das wiederholte Ändern der Flussrichtung G der Abgase X aufgeheizt ist. Das kalte Abgas X kühlt die Absorbenzien in dem Absorptionsbereich I und erwärmt sich dabei. Entspricht die Abgastemperatur nach dem Verlassen des Absorptionsbereichs I nicht der gewünschten Temperatur, wird diese im Heizbereich 3 auf das gewünschte Niveau angehoben. Nach dem Verlassen des Heizbereichs 3 durchströmt das heiße Abgas X die Absorbenzien (Kalk) im zweiten Absorptionsbereich II, wobei das heiße Abgas die Absorbenzien erwärmt und sich dabei abkühlt. Durch diesen Wärmeaustausch zwischen Abgas und Absorbenzien werden die Absorbenzien im Absorptionsbereich I immer kälter, wohingegen die Absorbenzien im Absorptionsbereich II immer wärmer werden. Als Folge ergibt sich für das Abgas eine schlechtere Aufheizung, im Absorptionsbereich I, welche durch zusätzlichen Brennstoff zur Beheizung des Heizbereichs 3 kompensiert werden muss, und es ergibt sich gleichzeitig eine schlechtere Abkühlung des Abgases aufgrund der stetig heißer werdenden Absorbenzien im Absorptionsbereich II, sodass das Abgas nach dem Verlassen des Absorptionsbereichs II kontinuierlich heißer wird.

Um diesen Prozess dauerhaft zu unterbrechen, wird die Temperatur des Abgases in der Rohgasleitung (1) vor der Absorptionsanlage A und die Temperatur des gereinigten Abgases in der Reingasleitung 2 hinter der Absorptionsanlage A gemessen. Überschreitet die Temperaturdifferenz einen zuvor festgelegten Wert Ω, wird die Durchströmungsrichtung umgeschaltet und das kalte Abgas X durchströmt, wie in Figur 2b dargestellt, zunächst den aufgeheizten Absorptionsbereich II, kühlt diesen aufgrund der Temperaturdifferenz zwischen dem kalten Abgas und dem aufgeheizten Absorptionsbereich ab und erwärmt sich dabei, wird im Heizbereich 3 durch den Brenner 25 auf das gewünschte Niveau angehoben, um dann den Absorptionsbereich I durch Wärmetausch zu erwärmen und sich dabei abzukühlen, solange bis die zuvor festgelegte Temperaturdifferenz den Wert Ω erneut überschreitet und die automatische Umschaltung die Flussrichtung G erneut umkehrt. Figur 2b entspricht im Wesentlichen der Darstellung der Figur 2a, nur dass hier das Abgas X, wie bereits erläutert, zuerst dem zweiten Absorptionsbereich II zugeführt wird und somit die Flussrichtung G des Abgases X durch die Absorptionsanlage A gegenüber der Darstellung in Figur 2a umgekehrt ist. Gleiche Positionen sind mit übereinstimmenden Positionsziffern dargestellt.

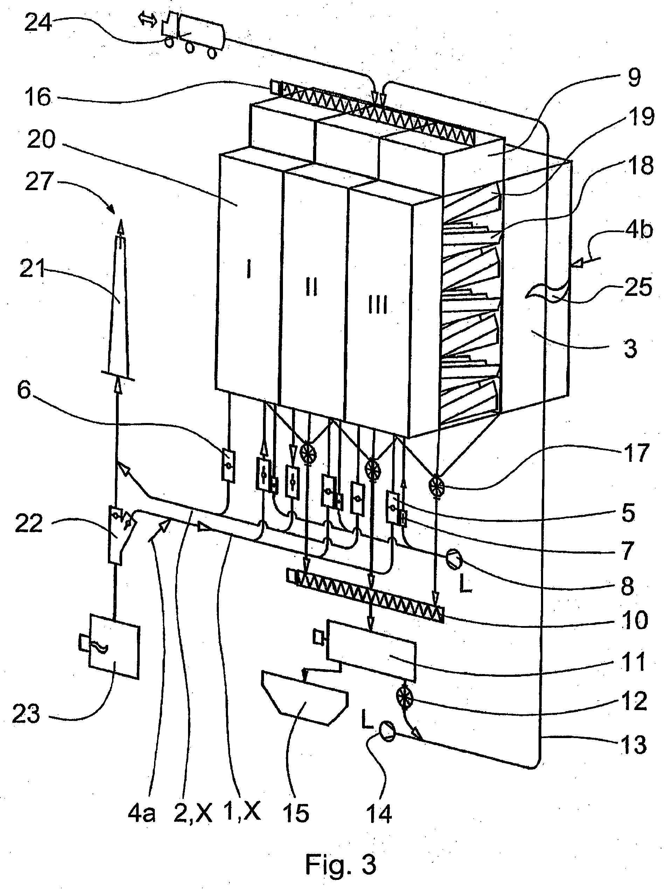

Figur 3 stellt den Gesamtprozess des nachgeschalteten Verfahrens nach Figuren 2a, 2b mit drei Absorptionsbereichen zur Vermeidung von Schadstoffspitzen bei der Umschaltung zwischen den Absorptionsbereichen dar.

Für das nachgeschaltete Verfahren hat es sich als vorteilhaft erwiesen, dass die Absorptionsanlage A um einen weiteren Absorptionsbereich mit jeweils einer weiteren Schüttschicht aus Absorbenzien erweitert wird. Durch die nun ungerade Anzahl an Absorptionsbereichen mit dem zwischengeschalteten Heizbereich ergibt sich die Möglichkeit, dass jeweils ein erster und zweiter Absorptionsbereich und der allen Absorptionsbereichen gemeinsame Heizbereich von den zu reinigenden Abgasen durchströmt werden. Unterdessen kann der nicht im Reinigungsbetrieb befindliche weitere Absorptionsbereich im Spülmodus durch ein so genanntes Spülluftgebläse mit Frischluft versorgt werden, der die innerhalb des Absorptionsbereichs noch vorhandenen Abgase über den Heizbereich in die im Reinigungsbetrieb befindlichen Absorptionsbereiche zurückdrückt und somit einer Reinigung zuführt. Auf diese Weise lassen sich Schadstoffspitzen während der Umschaltung der Flussrichtung der Abgase durch die einzelnen Absorptionsbereiche verhindern.

Zwischen den drei Absorptionsbereichen, die mit I, II und III gekennzeichnet sind, ist der Heizbereich mit dem Brenner 25 angeordnet. Jedem einzelnen Absorptionsbereich ist jeweils ein Austragsorgan 17 sowie eine Regelklappenanordnung zugeordnet, die jeweils eine Rohgasabsperrklappe 5 und eine Reingasabsperrklappe 6 sowie eine Spülluftabsperrklappe 7 aufweist. Oberhalb der Absorptionsbereiche I, II und III befinden sich jeweils Vorratsbehälter 9, die ein kontinuierliches Nachrutschen der Absorbenzien in derjenigen Größenordnung gewährleisten, in der das jeweilige Austragsorgan 17 belastete Absorbenzien nach unten aus dem Absorptionsbereich entfernt. Die Reinigung der Abgase erfolgt in mehreren, aufeinanderfolgenden Schritten, die im Folgenden näher erläutert werden:
Die zu reinigenden Abgase X werden mit einer Abgastemperatur von bis zu 675 K von einem hier nicht näher dargestellten Verbrennungsprozess 23 und einer bei Störungen aktivierten Bypassklappe 22 über eine Rogasleitung 1 und über die Rohgasabsperrklappe 5 der Sammelhaube 20 des ersten Absorptionsbereichs I zugeführt. Die Rohgasleitung 1 oder der Heizbereich ist mit einer Harnstoff-, Ammoniak-, bzw. Ammoniakwassereindüsung 4a, 4b versehen.

Die Sammelhaube 20 des Absorptionsbereichs I führt die Abgase gleichmäßig über die Kaltgaskanäle 18 verteilt dem Absorptionsbereich I zu. Innerhalb des Absorptionsbereichs I herrscht ein Temperaturgefälle mit niedrigeren Temperaturen im Bereich des Abgaseeintritts bis 675 K und hohen Temperaturen bis 1375 K im Bereich des Austritts der Abgase aus dem Absorptionsbereichs I und der Einleitung in den Heizbereich. Die Abgase werden in dem Absorptionsbereich I gleichzeitig mechanisch durch Adsorption von Ruß und Staubpartikeln, sowie chemisch durch Absorption von anorganischen Schadstoffen gereinigt.

Bei der Adsorption lagern sich am Kalk Staubpartikel und oberhalb von ca. 1225 K Schwermetalle an, welche zusammen in vertikaler Austragsrichtung über den gesamten Absorptionsbereich I mitgeführt und ausgetragen werden. Ruß lagert sich ebenfalls durch Adsorption am Kalk an, wird jedoch immer nur bis zu der nächsten Heißgaskanalreihe mitgeführt, um dort bei Temperaturen oberhalb 875 K zu verbrennen.

Bedingt durch das Temperaturgefälle wird sich das in den Absorptionsbereich I eintretende Abgas beim Durchströmen dieses Bereichs aufheizen, wobei gleichzeitig der erste Schritt der Reinigung erfolgt. Bei.den noch relativ geringen Eintrittstemperaturen beginnt als erstes das in den Abgasen befindliche HF, HCl und SO₃ eine Bindung mit den Absorbenzien einzugehen. Diese Reaktionen nehmen mit Erhöhung der Temperatur der Abgase beim Durchströmen des Absorptionsbereichs I hin zum Heizbereich 3 kontinuierlich ab. Bei höheren Temperaturen reagiert primär das in den Abgasen vorhandene SO₂ mit den Absorbenzien, wobei sich oberhalb von ca. 1225 K zusätzlich Schwermetalle durch Adsorption am Kalk anlagern.

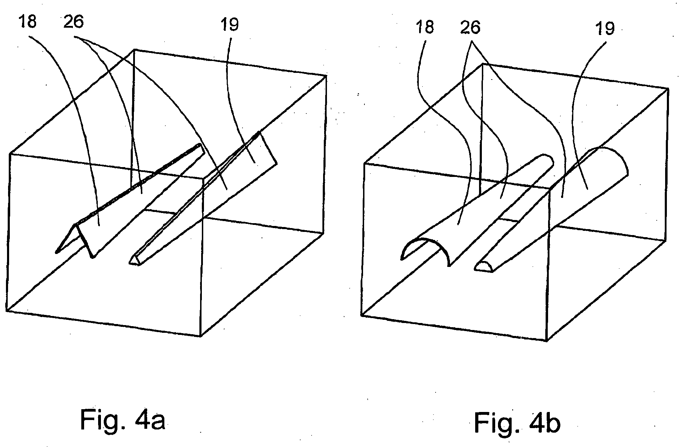

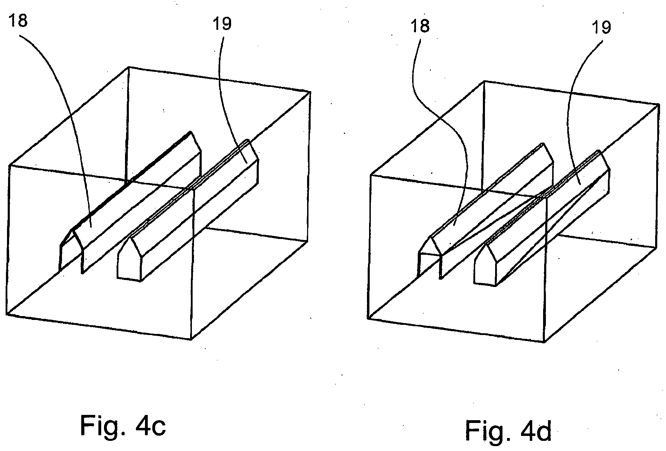

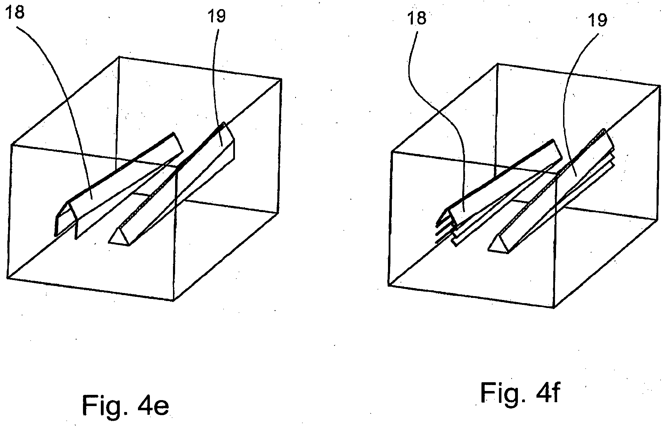

Nach dem Durchströmen des Absorptionsbereichs I verlassen die aufgeheizten Abgase X den heißesten Teil der Schüttschicht über die Heißgaskanäle 19 und gelangen in den Heizbereich 3. Der Heizbereich 3 besteht im Wesentlichen aus einer Kammer, die mit elektrischen Heizungen, oder aber einem oder mehreren Brennern 25 zum Zwecke der Temperaturerhöhung ausgerüstet ist. Der oder die Brenner können beispielsweise mit Gas oder Öl, bzw. Schweröl oder "Sludge" betrieben werden, um die Abgase auf eine Temperatur von bis zu 1375 K aufzuheizen. Sind in den Abgasen oder dem Brennstoff der Brenner neben anorganischen Schadstoffen organische Schadstoffe wie Ruß, Dioxine/Furane, und unvollständig verbrannte Kohlenwasserstoffe (VOC) vorhanden, werden diese im Heizbereich 3 durch eine Oxidation beseitigt. Alle verbleibenden Schadstoffe, die sich bis zu diesem Zeitpunkt in den organischen Schadstoffen befunden haben, werden nun durch die exotherme Reaktion in anorganische Schadstoffe, wie SOₓ, HF, HCl und NOₓ aufoxidiert, so dass die anorganische Schadstoffbelastung erst einmal wieder ansteigt. Ein gewünschter, positiver Effekt für die Wirtschaftlichkeit des Verfahrens ist nun, dass durch die entstehende exotherme Oxidation der im Abgas befindlichen organischen Stoffe ein nicht unerheblicher Teil Energie / Brennstoff in dem Heizbereich eingespart wird. Die Heiztätigkeit innerhalb des Heizbereichs 3 ist schematisch in den Figuren 2 und 4 durch eine große Flamme dargestellt. Aufgrund des durch die Harnstoff-, Ammoniak-, bzw. Ammoniakwassereindüsung (Siehe Figur 3, Pos. 4a, bzw. 4b) ins Abgas eingebrachten NH₃ findet nun simultan zur Oxidation der organischen Schadstoffe im Heizbereich 3 eine Reduktion der Stickoxide von NOₓ zu N₂ statt.

Nachdem die Abgase X den Heizbereich (Brennraum) durchlaufen haben und hierbei eine Temperatur von ca. 975 K - 1375 K erreicht haben, treten sie über die Heißgaskanäle 19 in den Absorptionsbereich II ein. Hier beginnt der dritte Schritt der Abgasreinigung durch Adsorption und Absorption. Noch im Abgas befindliche Schwermetalle und Staubpartikel, können sich hier wieder am Kalk anlagern und ausgetragen werden. Ruß ist in diesem Stadium bereits aus den Abgasen aufoxidiert und entfernt worden.

Alle jetzt noch vorhandenen, bzw. durch die Verbrennung im Heizbereich neu entstandenen anorganischen Schadstoffe werden nun im zweiten Absorptionsbereich II absorbiert.

Bedingt durch die hohe Temperatur des Abgases, reagiert zunächst wieder primär das SO₂ mit den Absorbenzien. Beim Durchströmen des Absorptionsbereichs II gibt das Abgas kontinuierlich Wärme an die Absorbenzien in der Schüttschicht ab. Niedrige Temperaturen sind mit einer verstärkten Reaktion der noch vorhandenen Schadstoffe HF, HCl und SO₃ mit den Absorbenzien verbunden. Am Ende des Reinigungsvorganges werden die gereinigten Abgase X über die Kaltgaskanäle 18 aus dem Absorptionsbereich II abgeführt, der Sammelhaube 20 des Absorptionsbereichs II, der geöffneten Reingasabsperrklappe 6 zugeführt und über eine Reingasleitung 2 sowie über einen Kamin 21 in die Atmosphäre 27 geleitet.

Sobald die Temperaturerhöhung der gereinigten Abgase in der Reingasrohrleitung 2 gegenüber den ungereinigten Abgasen in der Rohgasrohrleitung 1 einen vordefinierten Grenzwert Ω erreicht oder überschritten hat, wird die Flussrichtung der Durchströmung der Absorptionsbereiche umgekehrt. Auf diese Weise wird ein weiterer Temperaturanstieg im gereinigten Abgas vermieden und der daraus resultierende Energieverlust gering gehalten.

Die Umschaltung erfolgt derart, dass die ungereinigten Abgase X über die Rohgasrohrleitung 1 nunmehr dem Absorptionsbereich II zugeführt werden und durch diesen hindurchströmen. Unter Anbindung der im Abgas enthaltenen Schadstoffe und gleichzeitiger Aufheizung tritt das Abgas X sodann in den weiteren Heizbereich ein, in dem gemäß der oben gemachten Ausführungen eine weitere Aufheizung mit gleichzeitiger Oxidation von im Abgas enthaltenen Kohlenwasserstoffen und Ruß stattfindet. Des Weiteren erfährt das NOₓ eine Reduktion zu N₂. Nach Durchströmung des weiteren Absorptionsbereichs, der als erster Absorptionsbereich arbeitet, werden die gereinigten Abgase X über die Reingasleitung 2 dem Abgaskamin 21 zugeführt.

Gleichzeitig mit dem Betrieb der Absorptionsbereiche II und dem weiteren Absorptionsbereich werden mit Öffnen der Spülluftabsperrklappe 7 aus dem Absorptionsbereich I durch einen Spülluftventilator 8 die noch vorhandenen Abgase durch Reingase oder Luft L verdrängt. Nach dem Abschalten des Spülluftventilators und dem Schließen der Spülluftabsperrklappe 7 ist der Absorptionsbereich I nun wieder zur Durchströmung von zu reinigenden Abgasen X bereit, die aus dem weiteren Heizbereich, der nun als zweiter Absorptionsbereich arbeitet, in den Absorptionsbereich I strömen.

Die Umschaltung zwischen dem weiteren Absorptionsbereich und dem Absorptionsbereich I erfolgt analog zu den oben gemachten Ausführungen. Nachdem diese dritte Betriebsphase abgelaufen ist, beginnt der gesamte Umschaltzyklus wieder von vorne.

Figur 3 zeigt weiterhin eine Reibvorrichtung mit der dazugehörigen Rezirkulationsvorrichtung, die im Wesentlichen aus einer motorisch angetriebenen Sammelschnecke 10, der Reibvorrichtung 11, einer aus einer Schleuse 12, einem Rückfördergebläse 14 und einer Rohrleitung 13 bestehenden Transportvorrichtung besteht. Die gesamte Reibvorrichtung mit der dazugehörigen Rezirkulationsvorrichtung hat die Aufgabe, bereits umgewandelte Reaktionsprodukte von noch reaktionsfähigen Absorbenzien zu trennen, damit sie wieder dem Abgasreinigungsprozess zugeführt werden können. Die von den einzelnen Austragsorganen 17 aus den Absorptionsbereichen abgezogenen, nicht reaktionsfähigen Absorbenzien werden der Sammelschnecke 10 zugeführt und durch diese an die Reibvorrichtung 11 weitergeleitet. Nach dem Abreiben der nicht mehr reaktionsfähigen Oberfläche der Absorbenzien wird das Absorbenziengranulat, das eine Mindestkorngröße unterschreitet, abgesiebt und in einem geeigneten Behälter 15 gelagert. Die in der Reibvorrichtung verbleibenden Absorbenzien werden über die Schleuse 12 und die Rohrleitung 13 durch ein Rückfördergebläse 14 einer oberhalb der Absorptionsbereiche angeordneten Verteilerschnecke 16 zugeführt, die das Absorptionsmaterial gleichmäßig auf die Vorratsbehälter 9 der Absorptionsbereiche verteilt, sodass jederzeit ausreichend Absorptionsmaterial zum Nachrutschen in die Absorptionsbereiche vorhanden ist.

Die Figuren 4 a-f zeigen schematisch einen Teilbereich der Gasverteilerkanäle in den Absorptionsbereichen, die als Kaltgaskanäle 18 und der Heißgaskanäle 19 ausgeführt sind.

Figur 4a verdeutlicht den Aufbau der Gasverteilerkanäle aus gewinkelten Blechen 26, deren Höhe und Breite sich über die Länge in Durchströmungsrichtung der Abgase bzw. der Luft durch den Absorptionsbereich verändert. In der Darstellung nach Figur 4b sind die Kanäle 18, 19 als im Querschnitt halbkreisförmige Schalen dargestellt, deren Höhe und Breite sich über die Länge in Durchströmungsrichtung der Abgase bzw. der Luft durch den Absorptionsbereich verändert. Die Kaltgaskanäle 18 und die Heißgaskanäle 19 nach Figuren 6a, 6b sind gegengleich angeordnet.

Die Querschnittsform der Gasverteilerkanäle nach Figur 4c (Kaltgas- und Heißgaskanäle 18, 19) weisen die Form eines Vielecks auf, insbesondere in "Hausform". An einer Stirnseite weist jeder Gasverteilerkanal 18, 19 eine Einlassöffnung auf. Die gegenüberliegende Stirnseite ist geschlossen. An ihrer Unterseite sind die Gasverteilerkanäle 18, 19 offen. Diese Gasverteilerkanäle sind gegengleich im Absorptionsbereich angeordnet.

Die Querschnittsform der Gasverteilerkanäle nach Figur 4 d (Kaltgas- und Heißgaskanäle 18, 19) weisen ebenfalls die Form eines Vielecks auf, insbesondere in "Hausform. Diese Gasverteilerkanäle unterscheiden sich von den Gasverteilerkanälen nach Figur 4c dadurch, dass in dem Kanal ausgehend von der Einlassöffnung in Strömungsrichtung abfallende Leitbleche für die Abgasführung eingebaut sind. Der Zwischenraum zwischen dem Dach des Kanals und dem Leitblech wird mit Isoliermaterialien gefüllt. Die Isolation trennt die statisch hoch belasteten Bleche des Dachs physisch und thermisch von den heißen Leitblechen, die das Abgas führen.

Die Gasverteilerkanäle nach Figur 4e entsprechen in ihrer Ausführung den Kanälen in Figur 4c; sie unterscheiden sich jedoch dadurch, dass das Dach in Strömungsrichtung geneigt ist und die Höhe des Kanals über seine gesamte Länge in Strömungsrichtung kontinuierlich abnimmt, während die Breite des Kanals in Längsrichtung konstant ist.

Jeder Gasverteilerkanal nach Figur 4f weist zusätzlich zu der offenen Unterseite teilweise geöffnete Seitenwände auf. Die Seitenwände weisen mehrere im Abstand zueinander angeordnete und miteinander verbundene Lamellen auf, wobei jede Lamelle derart geneigt ist, dass die von oben nachgeführten Absorbenzien an den Lamellen abgleiten, nicht jedoch über die Öffnungen zwischen den Lamellen in das Innere des Kanals gelangen.

**Bezugszeichenliste:**

| | | | |
|---|---|---|---|
| 1 | Rohgasleitung | 25 | Brenner für 3 |
| 2 | Reingasleitung | 26 | Blech für 18 und/oder 19 |
| 3 | Heizbereich | 27 | Atmosphäre |
| 4 | Eindüsung | 28 | Kaltluftleitung |
| 4a | Eindüsung in 1 | 29 | Warmluftleitung |
| 4b | Eindüsung in 3 | 30 | Kaltluftabsperrklappe |
| 4c | Eindüsung in 23 | 31 | Warmluftabsperrklappe |
| 5 | Rohgasabsperrklappe | | |
| 6 | Reingasabsperrklappe | A | Absorptionsanlage |
| 7 | Spülluftabsperrklappe | H | Heißabsorptionsbereich |
| 8 | Spülluftventilator | L | Luft |
| 9 | Vorratsbehälter | X | Abgas |
| 10 | Sammelschnecke | G | Flussrichtung Gas |
| 11 | Reibvorrichtung | S | Schüttschicht |
| 12 | Schleuse | V | Zufuhr für S |
| 13 | Rohrleitung (Rezirkulation) | Z | Austragsrichtung |
| | | I | erster Absorptionsbereich |
| 14 | Rückfördergebläse | II | Absorptionsbereich zweiter |
| 15 | Behälter für Reaktionsprodukt | | |
| | | III | weiterer Absorptionsbereich |
| 16 | Verteilerschnecke | | |
| 17 | Austragsorgan | | |
| 18 | Kaltgaskanal | | |
| 19 | Heißgaskanal | | |
| 20 | Sammelhaube | | |
| 21 | Kamin | | |
| 22 | Bypassklappe | | |
| 23 | Verbrennungsprozess | | |
| 24 | LKW für Frischkalk | | |

## Patentansprüche

1. Verfahren zur trockenen Reinigung von Schadstoffen enthaltenden Abgasen (X) eines Verbrennungsprozesses (23) mittels granularen basischen Absorbenzien, die die Schadstoffe des Abgases aufnehmen, **gekennzeichnet durch** die Schritte
- Hindurchleiten der Abgase durch eine Absorptionsanlage (A) umfassend mindestens einen ersten Absorptionsbereich I, mindestens einen zweiten Absorptionsbereich II und einen zwischen jedem ersten Absorptionsbereich I und jedem zweiten Absorptionsbereich II angeordneten Heizbereich (3), wobei jeder erste und jeder zweite Absorptionsbereich eine Schüttschicht der Absorbenzien aufweist,
- kontinuierliches oder diskontinuierliches Austragen der mit Schadstoffen belasteten Absorbenzien aus der Schüttschicht jedes Absorptionsbereichs und Ersetzen durch unbelastete Absorbenzien, wobei sich die Absorbenzien in jedem Absorptionsbereich in einer Austragsrichtung(Z) bewegen,
- wiederholtes Ändern der Flussrichtung (G) der durch die Absorptionsanlage (A) hindurch geleiteten Abgase (X),
- wobei in einer ersten Flussrichtung (G) die Abgase (X) zunächst einen ersten Absorptionsbereich I, anschließend den Heizbereich (23) und schließlich einen zweiten Absorptionsbereich II durchströmen und
- wobei in einer zweiten, entgegengesetzten Flussrichtung (G) die Abgase zunächst einen zweiten Absorptionsbereich II, anschließend den Heizbereich (23) und schließlich einen ersten Absorptionsbereich I durchströmen.

2. Verfahren nach Anspruch 1, **gekennzeichnet durch** den weiteren Schritt
- Hindurchleiten der Abgase (X) durch eine Vielzahl von Gasverteilerkanälen (18,19) in jedem Absorptionsbereich, die derart in dem Absorptionsbereich angeordnet sind, dass das Abgas (X) die Schüttschicht durchströmt.

3. Verfahren nach Anspruch 1 oder 2, **gekennzeichnet durch** den weiteren Schritt
- Hindurchleiten der Abgase (X) durch jeden Absorptionsbereich, insbesondere wechselweise quer zur Austragsrichtung (Z) und/oder in und entgegen der Austragsrichtung (Z).

4. Verfahren nach Anspruch 2 oder 3, **gekennzeichnet durch** den weiteren Schritt
- Ändern der Flussrichtung (G) des Abgases durch jeden Absorptionsbereich der Absorptionsanlage (A) mit Hilfe einer Rohgasklappe (5) und einer Reingasklappe (6) für jeden Absorptionsbereich, wobei entweder die Rohgasklappe (5) zur Einleitung des mit Schadstoffe belasteten Abgases (X) in die Gasverteilerkanäle (18) des Absorptionsbereichs geöffnet wird oder die Reingasklappe (6) zur Ableitung des gereinigten Abgases aus den Gasverzeilerkanälen (18) des Absorptionsbereichs geöffnet wird.

5. Verfahren nach einem der Ansprüche 1 bis 4,
**gekennzeichnet durch** die weiteren Schritte
- Messen der Einleitungs-Temperatur des mit Schadstoffen belastete Abgases (X) vor Einleitung in die Absorptionsanlage (A),
- Messen der Ausleitungs-Temperatur des gereinigten Abgases nach Ausleitung aus der Absorptionsanlage (A),
- Umschalten von der ersten Flussrichtung (G) auf die zweite Flussrichtung (G) und Umschalten von der zweiten Flussrichtung (G) auf die erste Flussrichtung (G), abhängig von der Temperaturdifferenz zwischen Ausleitungs-Temperatur und Einleitungs-Temperatur.

6. Verfahren nach einem der Ansprüche 1 bis 5,
**gekennzeichnet durch** den weiteren Schritt
- Erhöhen der Temperatur der Abgase (X) in dem Heizbereich (23) auf eine vorgegebene Temperatur, die vorzugsweise derart bestimmt wird, dass die abgasreinigende Reaktion des Abgases (X) mit den Absorbenzien in jedem durchströmten Absorptionsbereich verbessert wird.

7. Anlage zur trockenen Reinigung von Schadstoffen enthaltenden Abgasen (X) eines Verbrennungsprozesses (23) mittels granularen basischen Absorbenzien, die die Schadstoffe des Abgases aufnehmen, umfassend
- einen Ofen oder Verbrennungsmotor, in dem der Verbrennungsprozess (23) stattfindet,
- eine dem Verbrennungsprozess (23) in dem Ofen oder Verbrennungsmotor nachgeschaltete Absorptionsanlage (A) eingerichtet zur trockenen Reinigung der Abgase (X) des Verbrennungsprozesses mittels der granularen basischen Absorbenzien, wobei
- die Absorptionsanlage (A) mindestens einen ersten, Absorptionsbereich I, mindestens einen zweiten Absorptionsbereich II und einen zwischen jedem ersten Absorptionsbsreich I und jedem zweiten Absorptionsbereich II angeordneten Heizbereich (3) umfasst,
- jeder erste und jeder zweite Absorptionsbereich eine Schüttschicht der Absorbenzien aufweist,
- zur Abgasreinigung Schüttschichten der Absorbenzien in jedem Absorptionsbereich zum Einsatz kommen, die aus Kalkstein (CaCO₃) oder Dolomit (CaCO₃-MgCO₃) bestehen,
- die Schüttschichten in jedem Absorptionsbereich von einem gesonderten Behälter aufgenommen werden, der jeweils an seiner Oberseite einen Einlass für mit Schadstoffen unbelastete Absorbenzien und an seiner Unterseite einen Auslass für den kontinuierlichen oder diskontinuierlichen Austrag für mit Schadstoffen belastete Absorbenzien aufweist,
- jeder erste Absorptionsbereich I, der Heizbereich (3) und jeder zweite Absorptionsbereich II für das Hindurchleiten der Abgase (X) durch die Absorptionsanlage (A) in einer ersten und einer zweiten Flussrichtung (G) eingerichtet sind,
- wobei in der ersten Flussrichtung (G) die Abgase (X) zunächst den ersten Absorptionsbereich I, anschließend den Heizbereich (3) und schließlich den zweiten Absorptionsbereich II durchströmen und
- wobei in der zweiten, entgegengesetzten Flussrichtung (G) die Abgase (X) zunächst den zweiten Absorptionsbereich II, anschließend den Heizbereich und schließlich den ersten Absorptionsbereich I durchströmen.

8. Absorptionsanlage (A) nach Anspruch 7, **dadurch gekennzeichnet, dass**
- jeder Absorptionsbereich der Absorptionsanlage (A) eine Rohgasklappe (5) und eine Reingasklappe (6) aufweist, die unabhängig voneinander in eine Öffnungs- oder Schließstellung bringbar sind, wobei zum Ändern der Flussrichzung des Abgases (X) durch jeden Absorptionsbereich der Absorptionsanlage (A) entweder die Rohgasklappe (5) zur Einleitung des mit Schadstoffen belasteten Abgases (X) in die Gasverteilerkanäle (18) des Absorptionsbereichs geöffnet oder die Reingasklappe (6) zur Ableitung des gereinigten Abgases (X) aus den Gasverteilerkanälen (18) des Absorptionsbereichs geöffnet wird.

9. Absorptionsanlage (A) nach Anspruch 7 oder 8, **dadurch gekennzeichnet, dass** in jedem Absorptionsbereich eine Vielzahl von Gasverteilerkanälen (18, 19) derart angeordnet ist, dass das Abgas (X) die Schüttschicht durchströmt.

10. Absorptionsanlage (A) nach einem der Ansprüche 7 bis 9, **dadurch gekennzeichnet, dass** in jedem Absorptionsbereich mehrere Reihen von Gasverteilerkanälen (18, 19) übereinander angeordnet sind.

11. Absorptionsanlage (A) nach Anspruch 9 oder 10, **dadurch gekennzeichnet, dass** der Querschnitt der Gasverteilerkanäle (18, 19) eine gleichbleibende Form aufweist.

12. Absorptionsanlage (A) nach Anspruch 9 oder 10, **dadurch gekennzeichnet, dass** der Querschnitt der Gasverteilerkanäle (18, 19) in Richtung von deren Längserstreckung eine unterschiedliche Größe aufweist, wobei die Breite der Gasverteilerkanäle an deren Unterseite vorzugsweise über deren gesamte Länge konstant ist.

13. Absorptionsanlage (A) nach einem der Ansprüche 7 bis 12, **dadurch gekennzeichnet, dass** in dem Heizbereich (3) eine elektrische Heizung oder ein Gas-, Öl- oder Schwerölbrenner angeordnet ist.

## Claims

1. Process for the dry cleaning of pollutant-containing exhaust gases (X) of a combustion process (23) by means of granular basic absorbents, which absorb the pollutants of the exhaust gas, **characterized by** the steps
- passing the exhaust gases through an absorption plant (A) comprising at least a first absorption area I, at least one second absorption area II and a heating area (3) located between each first absorption area I and each second absorption area II, while each first and each second absorption area feature a packed bed of absorbents,
- continuous or discontinuous discharge of the pollutant-loaded absorbents from the packed bed of each absorption area and replacing them by unloaded absorbents, while the absorbents in each absorption area moveto a discharge direction(Z),
- repeatedly changing of the flow direction (G) of the exhaust gases (X) passing through the absorption plant (A)
- wherein in a first flow direction (G) the exhaust gases (X) first flow through an absorption area I, then through the heating area (23) and finally through a secondabsorption area II and
- whereat in a second, opposite flow direction (G), the exhaust gases first flow througha second absorption area II, then through the heating area (23) and finally through the first absorption area I.

2. Process according to claim 1, **characterized by** the further step
- passing of the exhaust gases (X) through a multitude of gas manifold (18,19) in each absorption area, which are arranged in the absorption area so that the exhaust gas(X) flows through the packed bed.

3. Process according to claim 1 or 2, **characterized by** the further step
- passing of the exhaust gases (X) through each absorption area, in particular alternatingly crosswise to the direction of discharge (Z) and/or in and against the direction of discharge (Z)

4. Process according to claim 2 or 3, **characterized by** the further step
- changing of the flow direction (G) of the exhaust gas through each absorption area of theabsorption plant (A) by means of a raw gas damper (5) and a clean gas damper (6) for each absorption area, where at either the raw gas damper (5) for introducing thepolluted exhaust gas (X) in the gas manifolds (18) of theabsorption area is opened or the clean gas damper (6) for discharging the cleaned exhaust gas from the gas manifolds (18) of the absorption area isopened.

5. Process according to claim 1 to 4, **characterized by** the further steps
- measuring of the inlet temperature of the polluted exhaust gas (X) before the introduction into the absorption plant (A),
- measuring of the discharge temperature of the clean gas after outlet from the absorption plant (A),
- switching from the first flow direction (G) to the second flow direction (G) and switching from the second flow direction (G) to the first flow direction (G), depending on the temperature difference between the outlet temperature and the inlet temperature.

6. Process according to claim 1 to 5, **characterized by** the further step
- increasing the temperature of the exhaust gases (X) in the heating area (23) to a predetermined temperature, which is preferably determined as to improve the cleaning reaction of the exhaust gas (X) with the absorbents in eachflowed through absorption area.

7. Plant for the dry cleaning of exhaust gases (X) containing pollutants from a combustion process (23) by means of granular basic absorbents, which absorb the pollutants of the exhaust gas, comprising
- a furnace or combustion engine in which the combustion process (23) takes place,
- an absorption plant (A) downstream of the combustion process (23) in the furnace or combustion engineadapted for dry cleaning of the exhaust gases (X) from the combustion process by means of the granular basic absorbents, wherein
- the absorption plant (A) comprises at least one first absorption area I, at least one second absorption area II and a heating area (3), which ispositioned between eachfirstabsorption area I and each second absorption area II,
- every first and every second absorption area has a packed bed of absorbents,
- for exhaust gas cleaning,packed beds of absorbents ineach absorption are used, consisting of limestone (CaCO₃) or dolomite (CaCO₃-MgCO₃),
- the packed beds in each absorption area are received by a separate vessel, each having on the upper side an inlet for pollutant-unloaded absorbents and at the bottom side an outlet for the continuous or discontinuous discharge of the pollutant-loaded absorbents,
- each first absorption area I, the heating area (3) and each second absorption area II are arranged for passing the exhaust gases (X) through the absorption plant (A) in a first and a second flow direction (G),
- whereas in the first flow direction (G), the exhaust gases (X) first flow through the firstabsorption area I, then the heating area (3) and finally the second absorption area II and
- whereas in the second, opposite flow direction (G), the exhaust gases (X) first flow through the second absorption area II, then the heating area and finally the first absorption area I

8. Absorption plant (A) according to claim 7, **characterized in that**
- each absorption area of the absorption plant (A) has a raw gas damper (5) and a clean gas damper(6), which can be brought independently into an open or closed position, wherein for an alternationof the flow direction of the exhaust gas (X) through eachabsorption area of theabsorption plant (A) either the raw gas damper (5) for the introduction of the contaminatedexhaust gases (X) into the gas manifolds (18) of the absorption areas opens, or the clean gas damper (6) for discharging the cleanedexhaustgas (X) from the gas manifolds (18) of the absorption area opens.

9. Absorption plant (A) according to any of the claims 7 or 8, **characterized in that** in each absorption area a multitude of gas manifolds (18, 19) is arranged such that the exhaust gas (X) flows through the packed bed.

10. Absorption plant (A) according to any of the claims 7 to 9, **characterized in that** a multitude of rows of gas manifolds (18, 19) are arranged one above the other in each absorption area.

11. Absorption plant (A) according to claim 9 or 10, **characterized in that** the cross section of the gas manifolds (18, 19) has a constant shape.

12. Absorption plant (A) according to claim 9 or 10, **characterized in that** the cross section of the gas manifolds (18, 19) in the direction of their longitudinal extent,is of a different size, wherein the width of the gas manifolds on their underside is preferably constant over its entire length.

13. Absorption plant (A) according to any of the claims 7 to 12, **characterized in that** in the heating area (3) an electric heater or a gas, oil or heavy fuel oil burner is arranged.

## Revendications

1. Procédé pour le nettoyage sec des gaz d'échappement (X) contenant des polluants pour un procédé de combustion (23) au moyen d'absorbants basiques sous forme granulaire, qui assimilent les polluants du gaz, **caractérisé par** les pas
- Passage des gaz d'échappement par une installation d'absorption (A) comprenant au moins une première zone d'absorption I, au moins une deuxième zone d'absorption II et une zone de chauffe (3) qui est positionnée entre chaque première zone d'adsorption I et chaque deuxième zone d'absorption II, cependant chaque premier et chaque deuxième zone d'absorption présente une couche en vrac des absorbants,
- décharge continu ou en discontinu des absorbants qui sont chargés par les polluants de la couche en vrac de chaque zone d'absorption et remplacement par des absorbants non chargés, cependant que les absorbants dans chaque zone d'absorption se déplacent en direction de décharge (Z),
- commutation répétée de la direction d'écoulement (G) des gaz d'échappement (X) qui traversent l'installation d'absorption (A)
- cependant que pour une première direction d'écoulement (G) des gaz d'échappement (X) traversent d'abord une première zone d'absorption I, après la zone de chauffe(23) et finalement une deuxième zone d'absorption II et
- cependant que dans une deuxième direction d'écoulement (G) opposée des gaz d'échappement traversent d'abord une deuxième zone d'absorption II, après la zone de chauffe (23) et finalement une première zone d'absorption I.

2. Procédé selon revendication 1, **caractérisé par** le pas supplémentaire
- Passage des gaz d'échappement (X) par une pluralité de gaines de répartition de gaz (18,19) dans chaque zone d'absorption, qui sont tellement arrangées dans la zone d'absorption, que le gaz (X) puisse traverser la couche en vrac.

3. Procédé selon revendication 1 ou 2, **caractérisé par** le pas supplémentaire
- Passage des gaz d'échappement (X) par chaque zone d'absorption, en particulier réciproquement de travers de la direction de décharge (Z) et/ou en sens et en contre-sens de la direction de décharge (Z).

4. Procédé selon revendication 2 ou 3,**caractérisé par** le pas supplémentaire
- Commutation de la direction d'écoulement (G) des gaz d'échappement à travers de chaque zone d'absorption de l'installation d'absorption (A) à l'aide d'une soupape à gaz cru (5) et une soupape à gaz nettoyé (6) pour chaque zone d'absorption, cependant que la soupape à gaz cru (5) soit ouvert pour l'admission du gaz d'échappement (X) chargé par des polluants aux gaines de répartition de gaz (18) dans la zone d'absorption, ou soit ouvert la soupape du gaz d'échappement nettoyé (6) pour le rejet du gaz nettoyé provenant des gaines de répartition de gaz (18) de la zone d'absorption.

5. Procédé selon une des revendications 1 à 4, **caractérisé par** le pas supplémentaire
- Mesurage de la température d'admission des gaz d'échappement (X) chargés par polluants en amont de l'entrée dans l'installation d'absorption (A),
- Mesurage de la température de sortie des gaz d'échappement (X) nettoyés en aval de la sortie de l'installation d'absorption (A),
- Commutation de la première direction d'écoulement (G) sur la deuxième direction d'écoulement (G) et commutation de la deuxième direction d'écoulement (G) sur la première direction d'écoulement (G), dépendant de la différence de température entre la température de sortie et la température d'admission.

6. Procédé selon une des revendications 1 à 5, **caractérisé par** le pas supplémentaire
- Augmentation de la température des gaz d'échappement (X) dans la zone de chauffe (23) à une température de consigne, qui est préférablement déterminé de manière pour améliorer les réactions de nettoyage des gaz d'échappement (X) avec les absorbants dans chaque zone d'absorption qui sont traversés par les gaz.

7. Installation pour le nettoyage sec des gaz d'échappement (X) qui contiennent des polluants pour un procédé de combustion (23) par des absorbants sous forme de granules basiques, qui accueillent les polluants du gaz, comprenant
- un four ou un moteur de combustion dans laquelle un procédé de combustion (23) a lieu,
- une installation d'absorption (A) en aval d'un procédé de combustion (23) d'un four ou d'un moteur conçue pour le nettoyage sec des gaz d'échappement (X) du procédé de combustion par absorbants sous forme de granulés basiques, cependant que
- l'installation d'absorption (A) comprend au moins une première zone d'absorption 1 au moins une deuxième zone d'absorption Il et une zone de chauffe (3) qui est positionnée entre chaque première zone d'absorption I et chaque deuxième zone d'absorption II,
- chaque première et chaque deuxième zone d'absorption présente une couche en vrac d'absorbants,
- que chaque zone d'absorption utilise une couche en vrac pour le nettoyage des gaz d'échappement qui consistent des pierres à chaux (CaCO₃) ou de dolomite (CaCO₃-MgCO₃),
- un récipient spécial reçoit les couches en vrac dans chaque zone d'absorption, qui possède en haut une alimentation pour des absorbants pollués, et qui possède en bas une sortie pour le décharge en continue ou en discontinu pour les absorbants chargés par les polluants,
- chaque première zone d'absorption I, la zone de chauffe (3) et chaque deuxième zone d'absorption II sont conçues pour laisser traverser des gaz d'échappement (X) par l'installation d'absorption (A) dans une première direction d'écoulement(G) et une deuxième direction d'écoulement,
- cependant que la première direction d'écoulement (G) des gaz (X) traversent d'abord la première zone d'absorption I, après la zone de chauffe (3) et finalement la deuxième zone d'absorption II et
- cependant que la deuxième direction d'écoulement (G), direction opposée des gaz (X) traversent d'abord la deuxième zone d'absorption II, après la zone de chauffe (3) et finalement la première zone d'absorption I.

8. Installation d'absorption (A) selon revendication 7, **caractérisé par**
- chaque zone d'absorption de l'installation d'absorption (A) présente une soupape de gaz cru (5) et une soupape de gaz nettoyé (6), qui sont réglable séparément en position ouvert et en position fermé, cependant pour la commutation de la direction d'écoulement des gaz d'échappement (X) à travers de chaque zone d'absorption de l'installation d'absorption (A), il faut ouvrier la soupape de gaz cru (5) pour alimenter les gaz d'échappement (X) chargés par les polluants dans les gaines de répartition de gaz (18) de la zone d'absorption, ou il faut ouvrir la soupape de gaz nettoyé (6) pour évacuer le gaz nettoyé (X) à travers les gaines de répartition de gaz (18) de la zone d'absorption.

9. Installation d'absorption (A) selon revendication 7 ou 8, **caractérisé par le fait que** chaque zone d'absorption contient une pluralité de gaines de répartition de gaz (18, 19) qui sont arrangées d'une manière que le gaz (X) peut traverser la couche en vrac.

10. Installation d'absorption (A) selon une des revendications 7 à 9, **caractérisé par le fait que** dans chaque zone d'absorption plusieurs rangés des gaines de répartition de gaz (18, 19) sont superposées.

11. Installation d'absorption (A) selon revendication 9 ou 10, **caractérisé par le fait que** la section transversale des gaines de répartition de gaz (18, 19) possède une forme régulière.

12. Installation d'absorption (A) selon revendication 9 ou 10, **caractérisé par le fait que** la section transversale des gaines de répartition de gaz (18, 19) se change le long de leur longueur, et montrent une taille différente, tandis que la largeur des gaines de répartition de gaz au côté inférieure reste préférablement constante pour toute la longueur.

13. Installation d'absorption (A) selon une des revendications 7 à12, **caractérisé par le fait que** la zone de chauffe (3) comporte un chauffage électrique ou un brûleur à gaz, à huile ou à huile lourde.
